## Europäisches Patentamt
## European Patent Office
## Office européen des brevets

(19)

(11) Numéro de publication: **0 026 711**
**B1**

(12)

# FASCICULE DE BREVET EUROPEEN

(45) Date de publication du fascicule du brevet: **27.04.83**

(51) Int. Cl.³: **G 21 C 17/06**

(21) Numéro de dépôt: **80401373.8**

(22) Date de dépôt: **26.09.80**

(54) Procédé de détection acoustique et ultrasonique d'assemblages combustibles d'un réacteur nucléaire devenus défectueux en service et dispositif de détection correspondant.

(30) Priorité: **26.09.79 FR 7923909**

(43) Date de publication de la demande:
**08.04.81 Bulletin 81/14**

(45) Mention de la délivrance du brevet:
**27.04.83 Bulletin 83/17**

(84) Etats contractants désignés:
**BE CH DE GB IT LI SE**

(56) Documents cités:
**DE - A - 2 304 324
DE - B - 1 248 822
FR - A - 1 514 149
FR - A - 2 389 202
US - A - 4 016 749
US - A - 4 039 376**

(73) Titulaire: **Framatome
Tour Fiat 1 place de la Coupole
F-92400 Courbevoie (FR)**

(72) Inventeur: **Gravelle, Alain
68bis rue du Maréchal Foch
F-92260 Fontenay-aux-Roses (FR)**
Inventeur: **Marini, Jean
Chemin du Bois Martin
F-78160 Marly Le Roi (FR)**
Inventeur: **Weilbacher, Jean-Claude
10 rue des Chataigners
F-95660 Champagne-Sur-Oise (FR)**

(74) Mandataire: **Bouget, Lucien et al,
CREUSOT-LOIRE 15 rue Pasquier
F-75383 Paris Cedex 08 (FR)**

Courier Press, Leamington Spa, England.

**Procédé de détection acoustique et ultrasonique d'assemblages combustibles d'un réacteur nucléaire devenus défectueux en service et dispositif de détection correspondant**

L'invention concerne un procédé de détection acoustique et ultra-sonique d'assemblages combustibles d'un réacteur nucléaire devenus défectueux en service dans le réacteur par apparition de fissures dans le matériau de la gaine refermant le matériau fissile des éléments combustibles constituant les assemblages.

L'invention concerne également un dispositif pour la mise en oeuvre du procédé de détection acoustique.

Lors des arrêts pour rechargement des réacteurs nucléaires tels que les réacteurs nucléaires à eau sous pression, on effectue, lorsqu'on a décelé dans le fluide primaire du réacteur une activité $\gamma$ d'un niveau élevé, un contrôle des assemblages combustibles pour détecter ceux qui sont devenus défectueux en service à l'intérieur du réacteur.

En effet, ces assemblages combustibles défectueux libèrent par les fissures du matériau de gainage de certains de leurs éléments combustibles, des produits radio-actifs qui contaminent le fluide primaire.

Dans le cas des réacteurs à eau sous pression, les assemblages combustibles sont constitués par des faisceaux de crayons combustibles constitués par des tubes en matériau de grainage de grande longueur renfermant du matériau fissile.

Pendant les périodes d'arrêt du réacteur pour rechargement, on est amené à éliminer ou à réparer les assemblages défectueux pour replacer dans le coeur du réacteur des assemblages dont le matériau de gainage ne présente plus de fissures.

Il est donc nécessaire de détecter les assemblages défectueux parmi ceux qui ont séjourné dans le coeur et qui participent à l'opération de rechargement.

Pour cela, on contrôle séparément chacun de ces assemblages alors qu'ils sont entièrement immergés dans l'eau de la piscine de désactivation, ce qui permet d'éviter la contamination au voisinage de l'assemblage amené depuis le coeur du réacteur.

On utilise la plupart du temps pour détecter les fissures dans les éléments combustibles des assemblages le fait que le crayons combustibles présentant des fissures contiennent de l'eau qui s'est infiltrée à l'intérieur du crayon par les fissures.

Cette eau à l'intérieur des éléments combustibles peut être aisément détectée lorsqu'elle est vaporisée. On a donc proposé des procédés de détection des crayons d'un assemblage présentant des fissures qui consistent à chauffer les gaines de ces crayons au voisinage d'un bouchon et de détecter l'eau vaporisée ou condensée par un contrôle ultra-sonore par échos. Ce procédé qui fait l'objet du brevet français FR—A—2.222.732 à l'inconvénient de nécessiter l'inspection de chacun des crayons de l'assemblage pris isolèment après démontage de l'une des pièces d'extrémité de cet assemblage.

On connaît également un autre procédé décrit dans le brevet français FR—A—2.341.182 où l'assemblage combustible est porté à une température supérieure à la température d'ébullition de l'eau de façon à pouvoir détecter les signaux acoustiques accompagnant l'ébullition de l'eau dans les crayons défectueux.

Là encore, la détection doit se faire au niveau de chacun des crayons combustibles.

D'autre part, ces méthodes nécissitent une élévation de température des crayons combustibles de l'assemblage suffisante pour porter à ébullition le liquide, généralement de l'eau, qu'ils contiennent lorsqu'ils présentent des fissures.

On connaît également un autre procédé décrit dans le brevet américain US—A—4.016.749, où l'assemblage combustible plongé dans un liquide tel que l'eau de la piscine du réacteur, est soumis à une pression externe différente de la pression d'équilibre des gaz contenus dans les crayons combustibles. On peut, par exemple, remonter l'assemblage depuis le fond de la piscine sur une certaine hauteur pour diminuer la pression du milieu dans lequel baigne l'assemblage.

Les gaz contenus dans les éléments combustibles fissurés, tels que le gaz de remplissage des crayons et les gaz résultant de la fission de certains matériaux sont alors à une pression supérieure à la pression externe de sorte qu'ils se dilatent et sortent par les fissures sous forme de bulles. Cette émission de bulles produit des vibrations des crayons qui peuvent être enregistrées par un détecteur disposé au voisinage de l'assemblage.

Ce procédé manque cependant de sensibilité et ne permet pas de déceler de très petites fissures.

Le but de l'invention est donc de proposer un procédé de détection d'assemblages combustibles d'un réacteur nucleaire devenus défectueux en service dans le réacteur, par apparition de fissures dans le matériau de la gaine renfermant le matériau fissile des éléments combustibles constituant les assemblages, le procédé consistant à contrôler séparément chacun des assemblages alors qu'ils sont entièrement immergés dans un liquide de protection contre les radiations, en provoquant une dilatation et une sortie des gaz contenus dans le gaines de éléments combustibles par les fissures éventuelles de ces gaines et en détectant cette sortie de gaz éventuelle par enregistrement d'un phénomène acoustique lié à cette sortie de gaz dans le milieu de protection, ce procédé étant d'une mise en oeuvre facile et d'une grande sensibilité.

Dans ce but:

— on arrête la progression des bulles de gaz dans le liquide de protection au moyen d'un écran disposé au-dessus de l'assemblage,

— et on enregistre un phénomène acoustique lié au choc des bulles de gaz sur l'écran et/ou à l'accumulation du gaz sous la surface de l'écran, l'apparition de ce phénomène permettant de détecter la présence d'un assemblage défectueux.

Afin de bien faire comprendre l'invention on va maintenant décrire à titre d'exemple non limitatif un mode de réalisation d'un dispositif permettant la mise en oeuvre du procédé de détection acoustique suivant l'invention aussi bien dans le cas où la dilatation des gaz contenus dans les éléments combustibles est obtenue par élévation de température dans une cellule de ressuage que dans le cas où cette dilatation est obtenue par un autre moyen.

La figure 1 représente dans une vue en coupe, par un plan vertical de symétrie, le dispositif de mesure acoustique.

La figure 2 représente une vue suivant A de la figure 1.

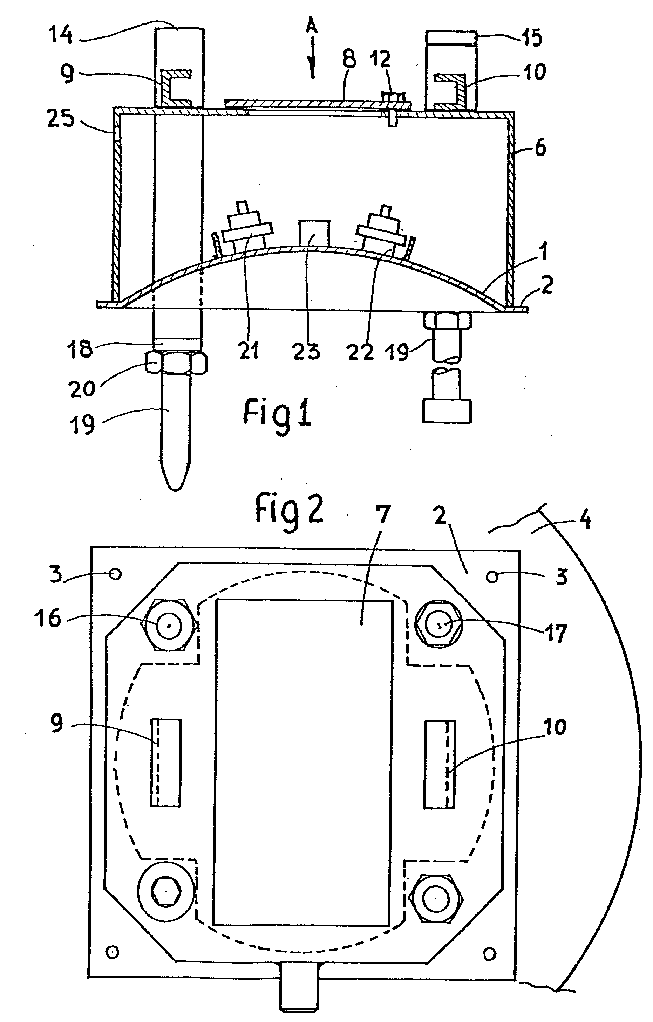

Sur la figure 1, on voit le dispositif constitué par un ensemble mécano-soudé comprenant une plaque métallique 1 mise en forme de façon à constituer une portion de surface sphérique, cette plaque métallique servant à la fois d'écran empêchant la progression des bulles de gaz vers le haut au-dessus de l'assemblage, de résonateur acoustique et de capacité d'accumulation des gaz s'échappant de l'assemblage.

Cette plaque 1 est elle-même fixée sur une plaque d'embase 2. Ainsi qu'il est visible sur les figures 1 et 2, la plaque d'embase 2 comporte des trous 3 à chacun de ses angles pour la fixation éventuelle de la plaque 2 sur une plaque circulaire de plus grande dimension 4 servant de plaque support lorsque le dispositif est placé sur une cellule de ressuage renfermant l'assemblage.

Sur la plaque d'embase 2 est fixé par soudage un caisson 6 en fermant complètement la surface supérieure de l'écran 1.

Ce caisson comporte sur sa face supérieure une ouverture 7 fermée par une trappe d'accès 8 fixée sur le caisson par de vis 12.

Sur la surface supérieure du caisson 6 sont également fixées deux portions de profilés 9 et 10 qui permettent une saisie du dispositif par le moyen de manutention du combustible pour son déplacement avec ou sans l'assemblage combustible.

Sur le caisson, sont également fixés des tubes 14, 15, 16 et 17 à chacun des angles du caisson, chacun de ces tubes étant solidaires à son extrémité d'un écrou tel que 18 dans lequel on peut venir fixer par vissage une tige filetée telle que 19 dont on peut fixer la position grâce à un contre-écrou 20 venant en position de serrage contre l'écrou 18. Chacune des tiges 19 peut venir se placer dans un trou ménagé dans la plaque supérieure d'un assemblage combustible, ce qui permet le centrage du dispositif de mesure par rapport à l'assemblage combustible et des moyens de liaisons permettent de solidariser l'assemblage du dispositif de mesure par l'intermédiaire des tiges 19.

La surface supérieure de la plaque écran 1 porte d'autre part des détecteurs d'émission acoustique de grande sensibilité 21 et 22 et un émetteur-récepteur d'ultra-sons 23.

Le caisson 6 comporte des ouvertures telles que 25 permettant d'une part son remplissage en eau de la piscine lorsqu'il est mis en position de service dans cette piscine du combustible et d'autre part pour le passage des câbles de mesure reliés aux détecteurs 21 et 22 et au transducteur 23.

On va maintenant décrire une opération de détection effectuée sur un assemblage combustible, d'une part dans le cas où l'assemblage amené du coeur du réacteur par les moyens de manutention de la centrale est déposé dans une cellule de ressuage disposée dans la piscine du combustible et d'autre part, dans le cas où l'on effectue le contrôle de cet assemblage amené depuis le coeur du réacteur, sans utiliser une cellule de ressuage.

Dans le premier cas, c'est-à-dire dans le cas où l'assemblage combustible a été déposé dans une cellule de ressuage, on équipe le dispositif de mesure acoustique d'une plaque support 4 dont la forme et la dimension correspondent à la forme et à la dimension du couvercle de la cellule de ressuage.

Une cellule de ressuage telle que celle qui a été décrite dans le brevet français FR—A— 2.389.202 est constituée par une enceinte de dimension suffisante pour contenir un assemblage combustible du réacteur renfermant de l'eau de la piscine et comportant des moyens pour être isolée thermiquement de la piscine dans laquelle la cellule de ressuage est entièrement plongée. Cette cellule est fermée par un couvercle circulaire et comporte des moyens de chauffage de l'assemblage qui permettent de provoquer ou d'augmenter les sorties de substances radio-actives gazeuses des éléments combustibles de l'assemblage.

Un circuit dans lequel circule du gaz rare branché sur la cellule de ressuage permet d'entrainer ces gaz radio-actifs et de les analyser pour déterminer si un assemblage présente des fuites.

Pour éviter l'utilisation de ce circuit d'analyse des gaz radio-actifs, on peut, lorsque l'assemblage a été placé à l'intérieur de la cellule de ressuage, poser sur cette cellule à la place du couvercle la plaque support du dispositif de mesure acoustique suivant l'invention, ce dispositif étant transporté et placé sur la cellule de ressuage grâce au mât de manutention du combustible.

Pour déterminer si l'assemblage combustible présente des fuites, il suffit d'augmenter sa température après avoir isolé thermiquement l'intérieur de la cellule par rapport à la piscine, l'augmentation de température de l'eau disposée à l'intérieur de la cellule entrainant une dilatation des gaz de fission qui se forment à l'intérieur des éléments combustibles et la sortie de ces gaz dans la cellule de ressuage si l'assemblage présente des fuites dans le matériau de gainage du combustible.

Dans le cas où l'assemblage est défectueux, c'est-à-dire si de telles fissures existent, les gaz de fission sortent par les fissures et les bulles s'échappant par les fissures remontent à la partie supérieure de la cellule de ressuage remplie d'eau de la piscine pour venir frapper sur l'écran 1 et venir s'accumuler sous le dôme constitué par cet écran sphérique.

Les émissions acoustiques accompagnant la sortie éventuelle des gaz de fission des éléments combustibles de l'assemblage sont enregistrées grâce aux détecteurs 21 et 22 et l'on peut déduire de la présence de telles émissions acoustiques la sortie de gaz sous l'effet de la chaleur et donc la présence de fissures dans l'assemblage.

De telles émissions peuvent être dues aux bruits émis par les bulles sortant par les fissures de l'assemblage mais étant donné la position des détecteurs acoustiques 21 et 22, cette émission est surtout due au choc des bulles de gaz sur l'écran 1 qui est choisi pour transmettre parfaitement les vibrations aux détecteurs 21 et 22.

La détection des phénomènes acoustiques liés à la sortie des bulles est ainsi beaucoup plus sûre que dans le cas du dispositif antérieur.

D'autre part lorsque le gaz s'accumule au sommet de la voûte limitée par l'écran 1, l'écho du signal d'ultrasons (écho de réflexion sur la partie supérieure de l'assemblage, par exemple), émis par l'émetteur-récepteur 23 est modifié et en mesurant l'amplitude de l'écho de ce signal ultrasonore, on peut, après avoir effectué un étalonnage, en déduire le volume de gaz dégagé dans la cellule de ressuage, ce volume étant une fonction linéaire de l'amplitude de l'écho. Cette amplitude décroit lorsque le volume des gaz dégagés au sommet de la cellule de ressuage augmente.

En mesurant l'amplitude de l'écho après un certain chauffage de l'eau à l'intérieur de la cellule de ressuage et de l'assemblage qui s'y trouve, on peut évaluer le volume des gaz dégagés c'est-à-dire l'importance des fissures de l'assemblage.

Cette méthode de détection par enregistrement de l'atténuation de l'écho d'un signal ultrasonore permet une détection de quantité de gaz extrêmement faible de l'ordre de 0,2 cm3.

Cette méthode présente donc l'avantage d'être extrêmement sensible donc utilisable pour des fissures très petites et d'autre part de permettre des mesures quantitatives.

Selon un deuxième mode de mise en oeuvre du procédé selon l'invention, on peut créer la dilatation du gaz de fission contenu dans les éléments combustibles de l'assemblage par une diminution de la pression externe à laquelle est soumis l'assemblage.

Lorsqu'on est en présence d'une fissure dans un élément combustible de cet assemblage, le gaz de fission qui est emprisonné dans l'élément combustible est en équilibre de pression avec le milieu extérieur.

Si la pression externe diminue, le gaz se dilate et sort par la fissure, ce qui produit un effet équivalent à un chauffage de l'assemblage.

Pour diminuer la pression externe du milieu en contact avec l'ssemblage, on a trouvé qu'il était très avantageux de remonter l'assemblage à l'intérieur de la piscine du combustible (ou même à l'intérieur de la piscine du réacteur) sur une certaine hauteur, la pression externe à laquelle est soumis l'assemblage diminuant alors de la valeur de la colonne d'eau ayant pour hauteur l'amplitude du déplacement vertical qu'on fait subir à l'assemblage.

Pour utiliser, dans ce cadre, le dispositif suivant l'invention, il suffit de solidariser ce dispositif de la plaque supérieure de l'assemblage et de soulever l'assemblage sous eau soit grâce au moyen de manutention du combustible dans la piscine du réacteur soit au moyen d'un des descenseurs de la piscine du combustible.

Il serait également possible d'utiliser un descenseur dans la piscine du réacteur si un tel dispositif était prévu dans cette piscine.

Par exemple on a effectué grâce à un descenseur de la piscine du combustible une remontée de l'assemblage à l'intérieur de cette piscine d'une amplitude de 5 mètres.

Ce déplacement vertical de l'assemblage combustible est suffisant pour entrainer un dégagement de gaz de fission aisément décelable par émission acoustique et par atténuation d'écho d'ultrasons grâce au dispositif qui a été décrit plus haut utilisé de la même façon que précédemment même dans le cas de très petites fissures.

En effet, une remontée de l'assemblage sur une hauteur de 5,50 mètres ce qui correspond à la hauteur disponible dans les piscines de combustible des réacteurs nucléaires construits actuellement est équivalente au point de vue dilatation du gaz des éléments combustibles fissurés à un échauffement supérieur à celui qu'on peut obtenir dans les cellules de ressuage, dans les conditions où on les utilise actuellement.

En effet, la pression en fond de piscine où est disposé l'assemblage au départ du mouvement vers le haut, c'est-à-dire sous 10 mètres d'eau, est égale à la pression atmosphérique à laquelle s'ajoute la pression de 10 mètres d'eau, soit 2 bars.

Lors de la remontée de 5,50 mètres, la variation relative de pression, c'est-à-dire en première approximation la variation relative de volume du gaz, est égale à

$$\frac{\Delta P}{P} = \frac{0,55}{2} = 27,5\%.$$

Pour avoir la même variation à partir d'un échauffement dans une cellule de ressuage il faudrait:

$$\frac{\Delta T}{T} = \frac{\Delta P}{P} = \frac{27,5}{100} = \frac{\Delta T}{303} \text{soit } \Delta T = 83,3°C,$$

en tenant compte de la température de l'eau de la piscine.

Une élévation de température de l'ordre de 83,3°C ne peut pas être obtenue à l'heure actuelle dans les cellules de ressuage, soit par élévation de température de l'élément due à son activité soit même par élévation plus brutale de température grâce à des résistances électriques.

D'autre part au cours de la dépressurisation de l'assemblage par levage de cet assemblage dans la piscine, le transfert thermique gaine-combustible diminue ce qui entraine un effet d'augmentation de la température qui facilite également la dilatation des gaz.

La dépressurisation étant rapide, il n'y a pas solubilisation des gaz dans l'eau qui baigne l'assemblage si bien qu'on recueille les bulles au niveau de la surface de l'écran interposé sur leur parcours.

Si l'on utilise la méthode de dépressurisation de l'assemblage par levage en piscine réacteur au lieu d'effectuer un levage de l'assemblage dans la piscine du combustible, il est possible, étant donnée la structure des piscines de réacteurs construits actuellement, d'augmenter encore la hauteur de levée d'un mètre, ce qui entraine un dilatation supérieure du gaz.

On a en effet dans ce cas

$$\frac{\Delta V}{V} = \frac{0,55+0,1}{2+0,1} = 31\%.$$

On peut remarquer que la méthode est effectivement utilisable dans la piscine du réacteur car la méthode de test utilisée est indépendante de l'activité de l'eau dans laquelle baigne l'assemblage, puisque la méthode de mesure entièrement acoustique en suppose aucune mesure d'activité.

Il peut donc être avantageux de prévoir un descenseur de la piscine du réacteur pour pouvoir effectuer le levage de l'assemblage dans les mêmes conditions que dans la piscine du combustible.

On voit que les principaux avantages du procédé suivant l'invention et du dispositif utilisé pour sa mise en oeuvre sont de permettre une détection de grande sensibilité c'est-à-dire d'assemblages présentant des fissures de très faibles dimensions, d'être d'une mise en oeuvre extrêmement simple et de permettre une mise en oeuvre à l'intérieur de la piscine du réacteur ou à l'intérieur de la piscine du combustible indifféremment. Ce procédé permet de déterminer très rapidement si un assemblage combustible est défectueux ou non.

L'invention ne se limite pas aux modes de réalisation qui ont été décrits, elle en comporte au contraire toutes les variantes.

C'est ainsi qu'on peut imaginer un procédé pour provoquer la dilatation du gaz contenu dans les éléments combustibles, quelconque, les procédés de dilatation par échauffement et par dépressurisation qui ont été décrits n'étant évidemment pas les seuls utilisables.

De même l'écran servant de barrière au déplacement du gaz dans l'eau qui entoure l'assemblage pourra avoir une forme différente de la forme sphérique et être fixé par rapport à l'assemblage d'une façon quelconque, à partir du moment où cet écran est disposé au-dessus de l'assemblage sur le trajet des fuites de gaz venant des éléments combustibles de l'assemblage.

Enfin le procédé et le dispositif suivant l'invention sont applicables non seulement aux réacteurs nucléaires à eau pressurisée mais également à tout autre type de réacteurs nucléaires utilisant des éléments combustibles comportant une matière fissile enfermée dans un matériau de gainage constituant une enveloppe étanche et reunis en nombre quelconque sous forme d'assemblages.

La forme sphérique de l'écran permet un éventuel échantillonnage des gaz dégagés à l'aide d'un mini-tube et d'un récipient adapté.

**Revendications**

1. Procédé de détection acoustique d'assemblages combustibles d'un réacteur nulcéaire devenus défectueux en service dans le réacteur, par apparition de fissures dans le matériau de la gaine renfermant le matériau fissile des éléments combustibles constituant les assemblages, le procédé consistant à contrôler séparément chacun des assemblages alors qu'ils sont entièrement immergés dans un liquide de protection contre les radiations, en provoquant une dilatation et une sortie des gaz contenus dans les gaines des éléments combustibles par les fissures éventuelles de ces gaines et en détectant cette sortie de gaz éventuelle par enregistrement d'un phénomène acoustique lié à cette sortie de gaz dans le milieu de protection, caractérisé par le fait:

— qu'on arrête la progression des bulles de gaz dans le liquide de protection au moyen d'un écran (1) disposé au-dessus de l'assemblage,

— et qu'on enregistre un phénomène acoustique lié au choc des bulles de gaz sur l'écran (1) et/ou à l'accumulation de gaz sous la surface de l'écran (1), l'apparition de ce phénomène permettant de détecter un assemblage défectueux.

2. Procédé de détection acoustique suivant la revendication 1, caractérisé par le fait que le phénomène acoustique enregistré est une émission sonore provoquée par le choc des bulles de gaz de fission sur l'écran (1).

3. Procédé de détection acoustique suivant l'une quelconque des revendications 1 et 2, caractérisé par le fait que le phénomène acoustique enregistré est une atténuation de l'écho d'un signal ultra sonore émis au niveau de la surface de l'écran (1), vers le base, l'atténuation dans le cas d'un assemblage défectueux étant due à la présence d'une accumulation de gaz sous la surface d l'écran (1).

4. Dispositif de détection acoustique pour la mise en oeuvre du procédé suivant l'une quelconque des revendications 1 à 3, caractérisé par le fait qu'il est constitué par un écran métallique (1), de forme courbe dont la concavité est dirigée vers le bas, sur la surface supérieure convexe duquel est disposé au moins un détecteur acoustique (21, 22) cet écran (1) étant solidaire d'une structure (2, 6) comportant des moyens de liaison (19) du dispositif à la plaque supérieure d'un assemblage et des moyens de préhension (9, 10) pour le levage du dispositif.

5. Dispositif suivant la revendication 4, caractérisé par le fait que le détecteur acoustique (21, 22) lié à la surface supérieure de l'écran est un détecteur sonore de grande sensibilité.

6. Dispositif de détection acoustique suivant la revendication 4, caractérisé par le fait que le détecteur acoustique (23) est un émetteur-récepteur d'ultra-sons.

## Patentansprüche

1. Schallprüfverfahren für die beim Einsatz in dem Kernreaktor fehlerhaft gewordenen Kernreaktorbrennelementbündel durch Auftreten von Werkstoffrissen in dem Hüllrohr, welches das Spaltmaterial der die Bündel bildenden Brennelemente enthält, bei welchem jeweils die in einem Strahlenschutzmedium vollständig eingetauchte Brennelementbündel einzeln geprüft werden, in dem eine Dehnung und ein Austreten der in den Brennelementbündelhüllrohren eingeschlossene Gase durch die evtl. an diesen Hüllrohren vorhandenen Rissen hervorgerufen wird und dieser evtl. Gasaustritt durch Aufzeichnung einer mit diesem Gasaustritt in dem Schutzmedium zusammenhängende akustische Erscheinung festgestellt wird, dadurch gekennzeichnet, daß das Wandern der Gasblasen in dem Schutzmedium durch einen über dem Brennelementbündel angeordneten Schirm (1) aufgehalten wird, und daß eine mit dem Aufprallen der Gasblasen auf dem Schirm (1) bzw. mit der Gasansammlung unter der Fläche des Schirmes (1) zusammenhängende akustische Erscheinung aufgezeichnet wird, wobei ein schadhaftes Brennelementbündel durch Auftreten dieser Erscheinung festgestellt werden kann.

2. Schallprüfverfahren nach Anspruch 1, dadurch gekennzeichnet, daß die registrierte akustische Erscheinung eine durch den Aufprall der Spaltgasblasen auf dem Schirm (1) hervorgerufene Schallemission ist.

3. Schallprüfverfahren nach einem der Ansprüche 1 und 2, dadurch gekennzeichnet, daß die registrierte akustische Erscheinung eine Echoabschwächung eines nach unten, in der Höhe der Oberfläche des Schirmes (1) abgegebenen Ultraschallsignals ist, wobei die Abschwächung bei einem schadhaften Brennelementbündel auf die Anwesenheit einer Gasansammlung unter der Oberfläche des Schirmes (1) zurückzuführen ist.

4. Schallprüfeinrichtung zur Anwendung des Verfahrens nach einem der Ansprüche 1 bis 3, dadurch gekennzeichnet, daß diese einen gewölbten Metallschirm (1) umfaßt, dessen Hohlfläche nach unten ausgerichtet ist, und auf dessen konvexe Oberfläche mindestens ein Schalldetektor (21, 22) angeordnet ist, wobei dieser Schirm (1) mit einer Baustruktur (2, 6) fest verbunden ist, die Mittel (19) zur Verbindung der Einrichtung mit der Oberplatte eines Brennelementbündels sowie Greifmittel (9, 10) zum Heben der Einrichtung aufweist.

5. Einrichtung nach Anspruch 4, dadurch gekennzeichnet, daß der mit der Schirmoberfläche verbunden akustische Detektor (21, 22) ein hochempfindlicher Schalldetektor ist.

6. Schallprüfeinrichtung nach Anspruch 4, dadurch gekennzeichnet, daß der akustische Detektor (23) ein Ultraschallschwinger ist.

## Claims

1. Method of acoustic detection of combustible arrays of a nuclear reactor which have become defective during operation in the reactor, as a result of the appearance of cracks in the material of the sheath enclosing the fissile material of the combustible elements constituting the arrays, the method involving checking each of the arrays separately when they are immersed completely in a liquid for protection against radiation, bringing about an expansion and an outlet of the gases contained in the sheaths of the combustible elements via the possible cracks in these sheaths and detecting this possible outlet of gas by recording an acoustic phenomenon linked to this outlet of gas in the protective medium, characterised in that the progress of the bubbles of gas in the protective liquid is stopped by means of a screen (1) located above the array and in that there is recorded an acoustic phenomenon linked to the impact of the bubbles of gas against the screen (1) and/or to the accumulation of gas under the surface of the screen (1), the occurrence of this phenomenon making it possible to detect a defective array.

2. Method of acoustic detection according to Claim 1, characterised in that the acoustic phenomenon recorded is a sound emission brought about by the impact of the bubbles of fission gas against the screen (1).

3. Method of acoustic detection according to either one of Claims 1 and 2, characterised in that the acoustic phenomenon recorded is an attenuation of the echo of an ultrasonic signal emitted downwards at the surface of the screen (1), the attenuation in the case of a defective array being attributable to the presence of an accumulation of gas under the surface of the screen (1).

4. Acoustic detection device for putting into effect the method according to any one of Claims 1 to 3, characterised in that it consists of a curved metal screen (1), the concavity of which is directed downwards and on the upper convex surface of which is located at least one acoustic detector (21, 22), this screen (1) being fixed to a construction (2, 6) having means (19) for connecting the device to the upper plate of an array and gripping means (9, 10) for lifting the device.

5. Device according to Claim 4, characterised in that the acoustic detector (21, 22) connected to the upper surface of the screen is a sound detector of high sensitivity.

6. Acoustic detection device according to Claim 4, characterised in that the acoustic detector (23) is an ultrasonic transmitter/receiver.

0 026 711

Fig 1

Fig 2